# EUROPEAN PATENT SPECIFICATION

(11) **EP 3 064 995 B1**
(45) Date of publication and mention of the grant of the patent: **25.07.2018**
(21) Application number: 14856917.1
(22) Date of filing: 11.06.2014
(51) Int. Cl.: G02B 17/08, G02B 5/02, B60K 35/00, G02B 25/02, G03B 21/20, G03B 21/28, G03B 21/62, G03B 33/12, G09F 9/00, G02B 27/01, G03B 21/00

(54) **TRANSMISSIVE SCREEN AND IMAGE DISPLAY DEVICE USING SAME**
LICHTDURCHLÄSSIGER SCHIRM UND BILDANZEIGEVORRICHTUNG DAMIT
ÉCRAN DE TRANSMISSION ET DISPOSITIF D'AFFICHAGE D'IMAGE UTILISANT CELUI-CI

(30) Priority: 28.10.2013 JP 2013223291
(43) Date of publication of application: 07.09.2016
(73) Proprietor: JVC KENWOOD Corporation, Kanagawa 221-0022 (JP)
(72) Inventor: SEGAWA, Masaru, Yokohama-shi, Kanagawa 221-0022 (JP)
(74) Representative: Carstens, Dirk Wilhelm
(86) International application number: PCT/JP2014/003109
(87) International publication number: WO 2015/063971

(56) References cited:
- WO-A1-2012/124266
- WO-A1-2013/068137
- JP-A- H08 160 205
- JP-A- 2003 098 601
- JP-A- 2007 272 208
- JP-A- 2010 096 874
- JP-A- 2011 247 997
- JP-A- 2012 163 715
- US-A1- 2013 265 646

## Description

### [TECHNICAL FIELD]

The present invention relates to transmission-type screens and image display devices using the transmission-type screens.

### [BACKGROUND ART]

Display devices for vehicles called head-up displays are known. Head-up displays are display devices that display information over a landscape outside a vehicle by allowing light entering from outside the vehicle to pass through and reflecting, on a windshield or the like of the vehicle, an image projected from an optical unit arranged inside the vehicle. Head-up displays have received attention as display devices for vehicles in recent years since head-up displays allow a driver who is visually recognizing a view outside a vehicle to recognize information of an image projected from an optical unit almost without changing the line of sight or a focus.

Image display light projected from the optical unit once forms an image on a transmission-type screen, and the image formed on the screen is presented to the user. As such a transmission-type screen, a configuration is disclosed where two light diffusion plates are layered (reference is made to, for example, JP 2003-98601 A.

JP2011-247997 A discloses a head-up display device. The head-up display device includes a liquid crystal display element that emits display light, and a concave mirror that reflects the display light. The liquid crystal display element is tilted such that an ideal optical axis of the display light, which is a light path connecting a center point of the liquid crystal display element and a center point of the concave mirror, forms a predetermined angle with a direction of a normal to the liquid crystal display element.

### [DISCLOSURE OF THE INVENTION]

### [PROBLEM TO BE SOLVED BY THE INVENTION]

The user recognizes the image via the transmission-type screen. Thus, the transmission-type screen is highly visible, desirably.

In this background, a purpose of the present invention is to provide transmission-type screens with enhanced visibility.

### [MEANS TO SOLVE THE PROBLEM]

In accordance with the present invention, an image display device as set forth in claim 1 is provided. Further embodiments are inter alia disclosed in the dependent claims.

### [ADVANTAGE OF THE INVENTION]

Transmission-type screens according to the present invention allow the visibility of a projected image to be increased.

### [BRIEF DESCRIPTION OF THE DRAWINGS]

Fig. 1 is a diagram schematically illustrating a form of installation of a head-up display according to an embodiment of the present invention;
Fig. 2 is a diagram illustrating the internal configuration of an optical unit;
Fig. 3 is a diagram schematically illustrating the internal configuration of an image projection unit;
Fig. 4 is a diagram illustrating an optical path of image display light that is projected on a windshield;
Fig. 5 is a diagram illustrating optical paths of image display light when a virtual image is presented for viewpoints of different height levels;
Fig. 6 is a diagram illustrating image display light that is distributed by an intermediate image formation unit;
Fig. 7 is a diagram illustrating the configuration of a diffusion screen;
Figs. 8A and 8B are diagrams illustrating the relationship between the angle of light incident on a light diffusion plate and the angle of light passing through the light diffusion plate; and
Fig. 9 is a graph illustrating the relationship between the angle of light incident on a light diffusion plate and a deviation angle of a principal ray emitted from the light diffusion plate.

### [MODE FOR CARRYING OUT THE INVENTION]

Described below is an explanation of the embodiments of the present invention with reference to figures. Specific numerical values and the like shown in the embodiments are shown merely for illustrative purposes to facilitate understanding of the invention and do not intend to limit the scope of the present invention, unless otherwise noted. In the subject specification and figures, elements having substantially the same functions and structures shall be denoted by the same reference numerals, and duplicative explanations will be omitted appropriately. Also, the illustration of elements that are not directly related to the present invention is omitted.

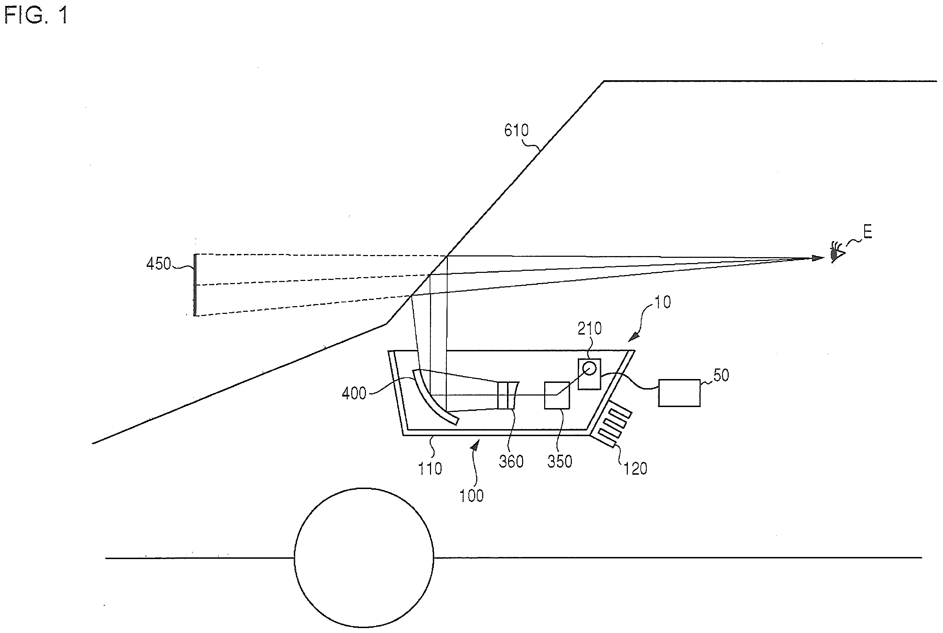

An explanation will be given using a head-up display 10, which is installed and used inside a dashboard of a vehicle, as an example for an image display device according to an embodiment. Fig. 1 is a diagram schematically illustrating a form of installation of the head-up display 10 according to the embodiment of the present invention. The head-up display 10 includes an optical unit 100 and a control device 50. Fig. 1 is a diagram illustrating a case where the optical unit 100 is arranged and used inside a left-side dashboard based on a travelling direction (leftward direction in Fig. 1) of a vehicle. The following embodiment shows an example where the head-up display 10 is arranged for a driver of a left-hand drive vehicle. For a right-hand drive vehicle, the internal configuration of the optical unit 100 may be horizontally flipped based on a travelling direction of the vehicle. With reference to Fig. 1, an explanation will be given of the outline of the head-up display 10 in the following.

A control device 50 is provided with a central processing unit (CPU) (not shown) and generates an image signal used for display on the optical unit 100. The control device 50 is also provided with an external input interface (not shown). An image signal output from an external device (not shown) such as a navigation device, a media reproduction device, or the like is input to the control device 50, and the control device 50 is also capable of outputting the image signal to the optical unit 100 after performing a predetermined process on the signal that has been input.

The optical unit 100 generates image display light that is displayed as a virtual image 450 on a windshield 610 based on the image signal generated by the control device 50. Therefore, the optical unit 100 is provided with an image projection unit 210, an intermediate mirror 350, an intermediate image formation unit 360, and a projection mirror 400 inside a housing 110.

The image projection unit 210 houses a light source, an image display element, various optical lenses, and the like. The image projection unit 210 generates image display light based on the image signal output from the control device 50 and projects the image display light. In the present embodiment, a case where a liquid crystal on silicon (LCOS), which is a reflection type liquid crystal display panel, is used as an image display element is illustrated for example. However, a digital micromirror device (DMD) may be used as the image display element. In that case, the DMD is assumed to be formed by an optical system and a drive circuit according to a display element to which the DMD is applied.

The image display light projected by the image projection unit 210 is reflected by the intermediate mirror 350. The image display light reflected by the intermediate mirror 350 forms an image in the intermediate image formation unit 360. The image display light related to a real image formed in the intermediate image formation unit 360 is transmitted through the intermediate image formation unit 360 and projected on the projection mirror 400.

The projection mirror 400 is a concave mirror, and the image display light transmitted through the intermediate image formation unit 360 is enlarged and projected on the windshield 610 by the projection mirror 400. The optical path of the image display light projected on the windshield 610 is changed to be directed toward the user by the windshield 610. A user E, who is the driver, recognizes the image display light reflected by the windshield 610 as a virtual image 450 in front of the windshield 610 in the direction of the line of sight.

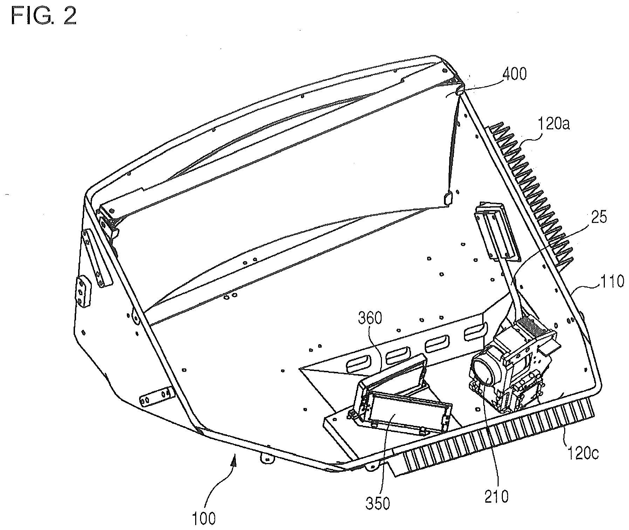

Fig. 2 is a diagram illustrating the internal configuration of the optical unit 100 according to the embodiment of the present invention. With reference to Fig. 2, an explanation will be given of the internal configuration of the optical unit 100 in the following.

As described above, the optical unit 100 is provided with an image projection unit 210, an intermediate mirror 350, an intermediate image formation unit 360, and a projection mirror 400 on the inside of a housing 110. The image projection unit 210 is provided with three different types of light sources each generating red light, green light, or blue light. The details will follow. The light sources can be realized using light emitting diodes (LED) or semiconductor laser light sources. In the present embodiment, a case where LEDs are used as the light sources will be explained.

The light sources generate heat during use. Therefore, the optical unit 100 is provided with a heat sink for cooling the light sources. There are three types of light sources. Thus, in order to cool these light sources, the optical unit 100 is provided with a heat sink 120a that is connected to a red light source, a heat sink 120b (not shown) that is connected to a green light source, and a heat sink 120c that is connected to a blue light source on the outside of the housing 110.

The housing 110 is a die case made of aluminum. The heat sink 120b and the heat sink 120c for cooling the blue light source and the green light source, respectively, are formed integrally with the housing 110. On the other hand, the heat sink 120a for cooling the red light source is installed at a place that is spatially apart from the heat sink 120b and the heat sink 120c and is externally attached separately from the housing 110. Therefore, heat generated by the red light source is transferred to the heat sink 120a via a heat pipe 25.

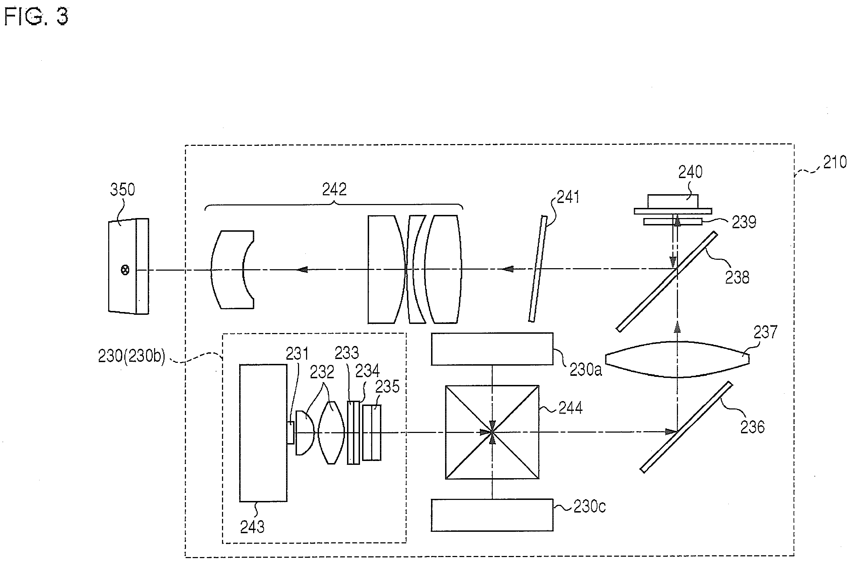

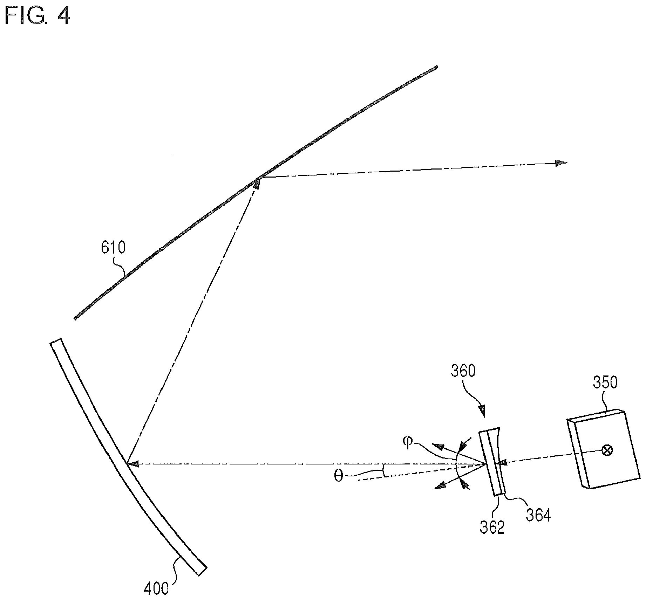

An explanation will now be given regarding the optical system of the head-up display 10 with reference to Fig. 3 and Fig. 4. Fig. 3 is a diagram schematically illustrating the internal configuration of the image projection unit 210 along with the optical path of the image display light. Fig. 4 is a diagram illustrating the optical path of the image display light that is projected on the windshield 610 via the intermediate mirror 350, the intermediate image formation unit 360, and the projection mirror 400.

With reference to Fig. 3, an explanation will be given of the internal configuration of the image projection unit 210. The image projection unit 210 is provided with illumination unit 230a, 230b, and 230c (hereinafter, also referred to as illumination units 230 generically), a dichroic cross prism 244, a reflection mirror 236, a field lens 237, a polarization beam splitter 238, a retardation plate 239, an analyzer 241, and a projection lens group 242. In Fig. 3, the descriptions regarding the internal configuration of the first illumination unit 230a and the internal configuration of the third illumination unit 230c are omitted, and only the internal configuration of the second illumination unit 230b is shown. However, the illumination units 230 have the same configuration.

The illumination units 230 are each provided with a light source 231, a collimate lens 232, an ultraviolet-infrared ray (UV-IR) cut filter 233, a polarizer 234, and a fly-eye lens 235. The light source 231 consists of a light-emitting diode that emits light of any one of a red color, a green color, and a blue color. The first illumination unit 230a has a light-emitting diode that emits red light as a light source. The second illumination unit 230b has a light-emitting diode that emits green light as the light source 231. The third illumination unit 230c has a light-emitting diode that emits blue light as a light source.

The light source 231 is attached to a light-source attachment portion 243. The light-source attachment portion 243 is combined thermally with a heat sink (not shown) and releases heat that is generated along with the emission of light by the light source 231. Light emitted by the light source 231 is changed to parallel light by the collimate lens 232. The UV-IR cut filter 233 absorbs and removes ultraviolet light and infrared light from the parallel light passed through the collimate lens 232. The polarizer 234 changes light that has passed through the UV-IR cut filter 233 to P-polarized light without disturbance. The fly-eye lens 235 then adjusts the brightness of light that has passed through the polarizer 234 to be uniform.

Light that has passed through respective fly-eye lenses 235 of the illumination units 230 enter the dichroic cross prism 244 from different directions. Red light, green light, and blue light that have entered the dichroic cross prism 244 become white light in which the three colors are combined and travel to the reflection mirror 236. The reflection mirror 236 changes the optical path of white light that has been synthesized by the dichroic cross prism 244 by 90 degrees. Light reflected by the reflection mirror 236 is collected by the field lens 237. The light collected by the field lens 237 is radiated to the image display element 240 via the polarization beam splitter 238 and the retardation plate 239, which transmit P-polarized light.

The image display element 240 is provided with a color filter of a red color, a green color, or a blue color for each pixel. The light radiated to the image display element 240 is changed to a color that corresponds to each pixel and modulated by a liquid crystal composition provided on the image display element 240. The light then becomes S-polarized image display light and emitted toward the polarization beam splitter 238. The emitted S-polarized light is reflected by the polarization beam splitter 238 and enters the projection lens group 242 after changing the optical path and passing through the analyzer 241. The image display light transmitted through the projection lens group 242 exits the image projection unit 210 and enters the intermediate mirror 350.

With reference to Fig. 4, an explanation will be given regarding the optical path of the image display light that is projected on the windshield 610 via the intermediate image formation unit 360 and the projection mirror 400 from the intermediate mirror 350. The optical path of the image display light emitted from the projection lens group 242 of the image projection unit 210 is changed to an optical path that is traveling to the projection mirror 400 by the intermediate mirror 350. In the meantime, a real image based on the image display light reflected by the intermediate mirror 350 is formed in the intermediate image formation unit 360.

The intermediate image formation unit 360 has a diffusion screen 362 and a concave lens 364. The diffusion screen 362 controls a light distribution angle ψ of the image display light traveling to the projection mirror 400 as well as forming a real image based on the image display light passing through the intermediate image formation unit 360. The concave lens 364 controls the direction of a principal ray of the image display light traveling to the projection mirror 400 and adjusts an angle θ formed by image display light before passing through the intermediate image formation unit 360 and image display light after passing through the intermediate image formation unit 360.

The image display light transmitted through the intermediate image formation unit 360 is reflected by the projection mirror 400 and projected on the windshield 610. The optical path of the image display light projected on the windshield 610 is changed to be directed toward the user by the windshield 610. Thereby, as described above, the user is able to visually recognize a virtual image based on the image display light in the forward direction via the windshield 610. Therefore, the windshield 610 functions as a virtual image presenting surface.

A configuration such as the one described above allows for the user to visually recognize a virtual image, which is based on an image signal output from the control device 50, over the real landscape via the windshield 610.

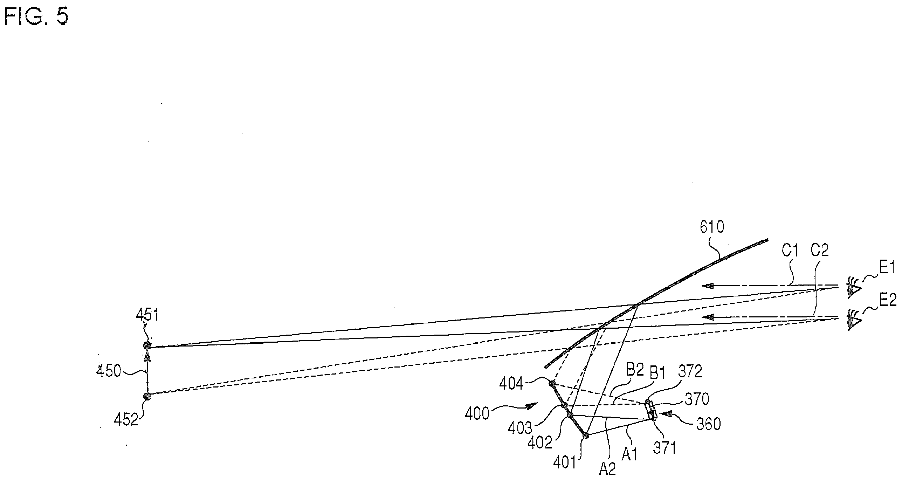

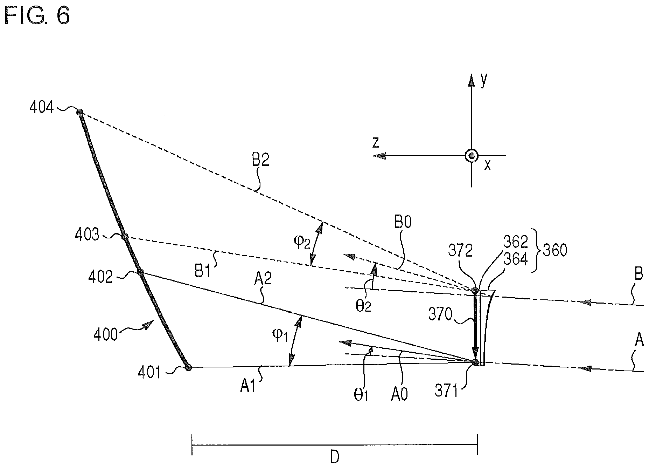

With reference to Fig. 5 and Fig. 6, functions of the intermediate image formation unit 360 according to the present embodiment will be described in detail. Fig. 5 is a diagram illustrating optical paths of image display light when a virtual image 450 is presented for viewpoints E1 and E2 of different height levels. Fig. 6 is a diagram illustrating image display light that is distributed by the intermediate image formation unit 360 and shows, in an enlarged view, optical paths between the intermediate image formation unit 360 and the projection mirror 400 that are shown in Fig. 5.

As shown in Fig. 5, the viewpoints E1 and E2 of the user, who is the driver, change in the vertical direction depending on the height or the seating position of the driver. Even when a viewpoint of the user changes, the entirety of the virtual image 450 from an upper end portion 451 to a lower end portion 452 can be visually recognized preferably. Further, instead of presenting the virtual image 450 right in front of a line-of-sight direction C1 or C2 in which the user looks in the forward direction of the vehicle, presenting the virtual image 450 at a position that is shifted in the vertical direction allows the user to refer to the virtual image 450 by slightly shifting the direction of the line of sight when necessary, thus ensuring the user-friendliness.

In the present embodiment, by combining the diffusion screen 362 and the concave lens 364 as the intermediate image formation unit 360, the direction of a principal ray and the light distribution angle of the image display light that has passed through the intermediate image formation unit 360 are controlled, and the visibility of the virtual image 450 is increased. In particular, by providing the concave lens 364 eccentrically in the vertical direction, the presentation position of the virtual image 450 can be shifted in the vertical direction, and the virtual image 450 can be presented at an easily viewable position. In the present embodiment, a configuration is shown for a case where the virtual image 450 is presented downward with respect to the line-of-sight directions C1 and C2. However, by changing the state of eccentricity of the concave lens 364, the virtual image 450 may be presented at a different position.

First, differences in a path of image display light according to differences between the viewpoint E1 and the viewpoint E2 are described in detail with reference to Fig. 5. The first viewpoint E1 is an upper limit position that allows the entirety of the virtual image 450 to be visually recognized, and the second viewpoint E2 is a lower limit position that allows the entirety of the virtual image 450 to be visually recognized. Therefore, the user is able to visually recognize the entirety of the virtual image 450 as long as the user's viewpoint is in a range between the first viewpoint E1 and the second viewpoint E2.

In Fig. 5, light A1 and light A2 that are shown by solid lines represent light rays for presenting the user the upper end portion 451 of the virtual image 450, and light that is emitted from an upper end portion 371 of a real image 370 formed in the intermediate image formation unit 360 is reflected on the projection mirror 400 and the windshield 610 and reaches the user's viewpoints E1 and E2. The light A1 that is traveling to the first viewpoint E1 is reflected at a first reflection position 401 of the projection mirror 400, and the light A2 that is traveling to the second viewpoint E2 is reflected at a second reflection position 402 of the projection mirror 400. In an optical system shown in the present embodiment, a configuration is employed where image display light is reflected on the projection mirror 400 and the windshield 610. Thus, a real image that is vertically flipped is formed in the intermediate image formation unit 360.

On the other hand, light B1 and light B2 that are shown by broken lines represent light rays for presenting the user the lower end portion 452 of the virtual image 450, and light that is emitted from a lower end portion 372 of the real image 370 formed in the intermediate image formation unit 360 is reflected on the projection mirror 400 and the windshield 610 and reaches the viewpoints E1 and E2. The light B1 that is traveling to the first viewpoint E1 is reflected at a third reflection position 403 of the projection mirror 400, and the light B2 that is traveling to the second viewpoint E2 is reflected at a fourth reflection position 404 of the projection mirror 400.

Then, image display light that is distributed in the vertical direction by the intermediate image formation unit 360 will be described in detail with reference to Fig. 6. Fig. 6 shows, in an enlarged view, the optical paths between the intermediate image formation unit 360 and the projection mirror 400 that are shown in Fig. 5. Light A that forms an image as the upper end portion 371 of the real image 370 enters the concave lens 364, changes the direction in the upward direction (y direction) by an angle θ₁, and becomes transmitted based on a direction that is perpendicular to the diffusion screen 362. Then, the light A forms an image as a real image and becomes diffused on the diffusion screen 362 and travels to the projection mirror 400 as image display light having a light distribution angle ψ₁. As a result, the light A that enters the intermediate image formation unit 360 becomes image display light that is distributed between light A1 traveling to the first reflection position 401 and light A2 traveling to the second reflection position 402, centering around a principal ray A0.

Similarly, light B that forms an image as the lower end portion 372 of the real image 370 enters the concave lens 364, changes the direction in the upward direction (y direction) by an angle θ₂, and becomes transmitted. Then, the light A forms an image as a real image and becomes diffused on the diffusion screen 362 and travels to the projection mirror 400 as image display light having a light distribution angle ψ₂. As a result, the light B that enters the intermediate image formation unit 360 becomes image display light that is distributed between light B1 traveling to the third reflection position 403 and light B2 traveling to the fourth reflection position 404, centering around a principal ray B0.

The concave lens 364 according to the present embodiment is provided eccentrically in the vertical direction (the vertical direction in Fig. 4) based on the z direction. More specifically, the positon of an optical axis of the concave lens 364 is located below the center position of the diffusion screen 362. Therefore, the angle θ₂ of the principal ray B0 emitted from the lower end portion 372, which is far away from the optical axis of the concave lens 364, is larger than the angle θ₁ of the principal ray A0 emitted from the upper end portion 371, which is close to the optical axis of the concave lens 364.. The concave lens 364 according to the present embodiment is formed such that the optical axis of the concave lens 364 is not included in a concave surface thereof. Thus, the principal rays A₀ and B₀ are both emitted in a tilted manner toward the upward direction (y direction).

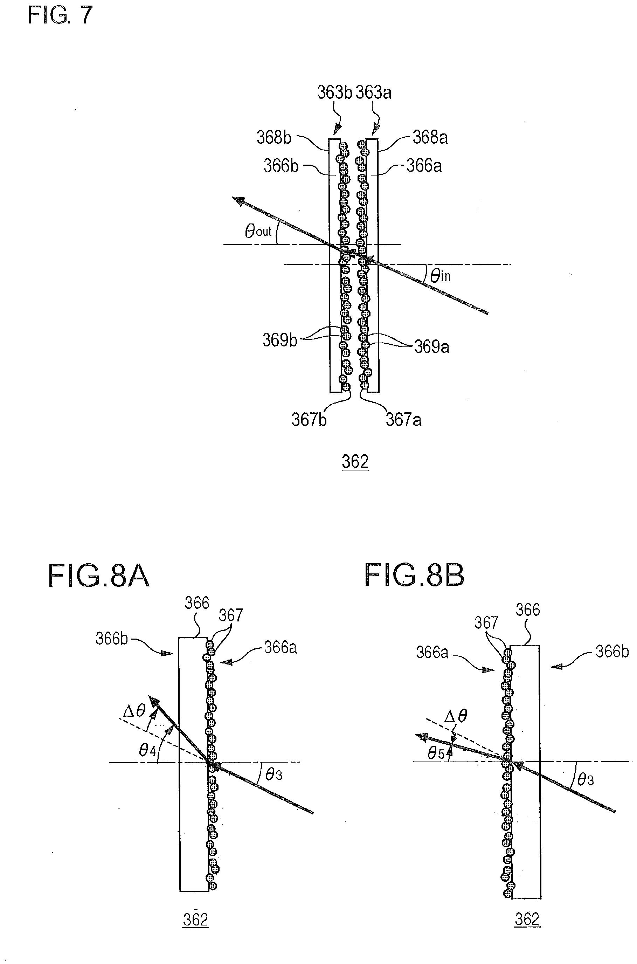

Then, with reference to Fig. 7, a description will be made in detail regarding the diffusion screen 362 in the present embodiment. Fig. 7 is a diagram illustrating the configuration of the diffusion screen 362. The diffusion screen 362, which is a transmission-type screen, is provided with two light diffusion plates 363a and 363b. The two light diffusion plates 363a and 363b are layered in such a direction that light diffusion surfaces 367a and 367b on which diffusion beads 369a and 369b are respectively provided face each other. In the diffusion screen 362, the degree of difference is reduced between an incident angle θᵢₙ of light entering the diffusion screen 362 and an emission angle θₒᵤₜ of a principal ray of diffused light emitted from the diffusion screen 362 by arranging the light diffusion surfaces 367a and 367b to face each other. Thereby, the diffusion screen 362 properly adjusts the emission angle θₒᵤₜ of the principal ray of the diffused light and presents an image that is highly visible to the user.

The diffusion screen 362 is provided with a first light diffusion plate 363a and a second light diffusion plate 363b. The first light diffusion plate 363a has a first base member 366a and a plurality of first diffusion beads 369a. The first base member 366a has a first light diffusion surface 367a and a first flat surface 368a that face each other. Similarly, the second light diffusion plate 363b has a second base member 366b and a plurality of second diffusion beads 369b, and the second base member 366b has a second light diffusion surface 367b and a second flat surface 368b that face each other.

The first base member 366a and the second base member 366b (hereinafter, also referred to as base members 366, generically) are flat plates formed of transparent resin materials or the like. Flexible transparent films may be used as the base members 366. The first diffusion beads 369a and the second diffusion beads 369b (hereinafter, also referred to as diffusion beads 369, generically) are highly-transparent optical beads, and the diameter thereof is 10 micrometers or less. The diffusion beads 369 are applied on the first light diffusion surface 367a and the second light diffusion surface 367b (hereinafter, also referred to as light diffusion surfaces 367, generically) in a thickness of 10 to 15 micrometers.

In the present embodiment, light diffusion plates 363 having the same light diffusion capability are used as the first light diffusion plate 363a and the second light diffusion plate 363b. Therefore, the first light diffusion plate 363a and the second light diffusion plate 363b that are provided to face each other diffuse light in the same light distribution. Having an identical light distribution means having optical properties that allow the intensity distribution of transmitted light to be almost identical when light having a specific intensity distribution becomes incident.

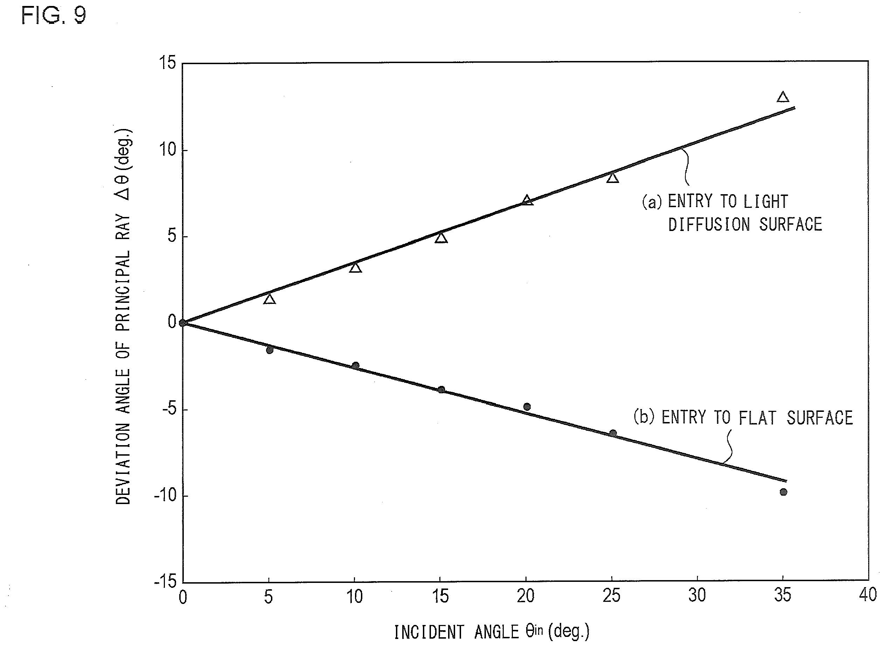

Then, with reference to Figs. 8A and 8B and Fig. 9, an explanation will be given regarding the optical properties of the light diffusion plates 363 forming the diffusion screen 362. Figs. 8A and 8B are diagrams illustrating the relationship between an incident angle θᵢₙ of light incident on a light diffusion plate 363 and emission angles θₒᵤₜ₁ and θₒᵤₜ₂ of light passing through the light diffusion plate 363. Fig. 8A shows a case where light becomes incident on a light diffusion surface 367, which is a bead surface, and Fig. 8B shows a case where light becomes incident on a flat surface 368, which is not a bead surface. When letting light to enter through the light diffusion surface 367, which is a bead surface, the angle of a principal ray changes to an emission angle θₒᵤₜ₁, which is larger by Δθ₁ with respect to the incident angle θᵢₙ. On the other hand, when letting light to enter through the flat surface 368, which is not a bead surface, the angle of a principal ray changes to an emission angle θₒᵤₜ₂, which is smaller by Δθ₂ with respect to the incident angle θᵢₙ. This is because the way of change in angle is different in a case where the angle of light changes when entering a diffusion bead 369, which forms a spherical surface, and in a case where the angle of light changes when being emitted from the diffusion bead 369.

Fig. 9 is a graph illustrating the relationship between the angle of light incident on a light diffusion plate 363 and a deviation angle of a principal ray emitted from the light diffusion plate 363. A straight line shown by (a) shows a deviation angle Δθ₁ occurring when light enters the light diffusion surface 367, which is a bead surface, and corresponds to a case where light enters as shown in Fig. 8A. On the other hand, a straight line shown by (b) shows a deviation angle Δθ₂ occurring when light enters through the flat surface 368, which is not a bead surface, and corresponds to a case where light enters as shown in Fig. 8B. In Fig. 9, with regard to whether a deviation angle Δθ is positive or negative, the deviation angle Δθ has a positive value when an emission angle θₒᵤₜ is larger than an incident angle θᵢₙ and has a negative value when the emission angle θₒᵤₜ is smaller than the incident angle θᵢₙ, and a relationship, θₒᵤₜ = θᵢₙ + Δθ, is satisfied.

As shown in Fig. 9, the value of the deviation angle Δθ is found to become larger as the incident angle θᵢₙ becomes larger in both the case of (a) where light enters the light diffusion surface 367 and the case of (b) where light enters the flat surface 368. In the case of (a) where light enters the light diffusion surface 367 and in the case of (b) where light enters the flat surface 368, the size of the deviation angle Δθ with respect to the incident angle θᵢₙ is found to be almost the same although the positive or negative sign of the deviation angle Δθ is different.

According to optical properties shown in Fig. 9, if only one light diffusion plate 363 is used as a diffusion screen, the angle of a principal ray of emitted light changes when light enters the diffusion screen at an angle. In that case, even when the direction of the principal ray is properly controlled by the concave lens 364, the direction of the principal ray changes due to the light diffusion plate 363, which is used independently, and the visibility of image display light that is presented to the user may be lowered.

Meanwhile, in the diffusion screen 362 according to the present embodiment, the first light diffusion plate 363a and the second light diffusion plate 363b, which exhibit the same light distribution, are combined such that the respective light diffusion surfaces 367a and 367b face each other. Therefore, even when a deviation angle occurs between an incident angle and an emission angle in each of the first light diffusion plate 363a and the second light diffusion plate 363b, a deviation angle caused by the first light diffusion plate 363a can be corrected by a deviation angle caused by the second light diffusion plate 363b. This is because, as shown in Fig. 7, light that enters the first flat surface 368a of the first light diffusion plate 363a is emitted from the light diffusion surface 367a at an emission angle that is smaller than its incident angle by a deviation angle Δθ, and the light that then directly enters the second light diffusion surface 367b of the second light diffusion plate 363b is emitted from the second flat surface 368b at an emission angle that is larger than its incident angle by the deviation angle Δθ.

A description will be given in the following regarding effects that are achieved by the intermediate image formation unit 360 in the present embodiment.

The intermediate image formation unit 360 in the present embodiment has a diffusion screen 362 that controls the light distribution angle of a principal ray such that image display light is realized that has predetermined light distribution angles ψ₁ and ψ₂ with respect to principal rays A0 and B0, respectively. Therefore, a virtual image with a certain level of brightness can be presented even when the line-of-sight position is moved as long as the line-of-sight position is moved within a predetermined range. Also, by selecting, as the diffusion screen 362, a diffusion screen having characteristics where light distribution angles ψ₁ and ψ₂ fall within a range from the first reflection position 401 to the second reflection position 402 of the projection mirror 400 or a range from the third reflection position 403 to the fourth reflection position 404, the image display light can be utilized highly efficiently. If the light distribution angles are narrower than these reflection position ranges, the range of a viewpoint where the virtual image 450 is able to be presented in a bright manner becomes narrow. On the other hand, if the light distribution angles are wider than these reflection position ranges, the proportion of image display light that is not reflected by the projection mirror 400 increases, and the virtual image 450 presented to the user thus becomes dark. As described, by properly controlling the light distribution angles ψ₁ and ψ₂, the virtual image 450 can be presented to the user in a bright manner with high efficiency, and the visibility of the virtual image 450 can be increased.

The intermediate image formation unit 360 has a concave lens 364 that controls the respective directions of the principal rays A0 and B0 that have passed through the intermediate image formation unit 360. By providing the concave lens 364 as the intermediate image formation unit 360, the virtual image 450 that is presented to the user can be further enlarged even when a distance D between the intermediate image formation unit 360 and the projection mirror 400 has to be shortened. Therefore, by providing the concave lens 364, a larger virtual image 450 can be presented while the size of the optical unit 100 is reduced, and the visibility of the virtual image 450 can be increased.

In the intermediate image formation unit 360, the concave lens 364 is provided eccentrically in the vertical direction. Thereby, instead of presenting the virtual image 450 right in front of the user's line-of-sight direction, the virtual image 450 can be presented at a position that is shifted slightly in the vertical direction. This is because an angular difference can be provided between light for presenting an upper end portion 451 of the virtual image 450 and light for presenting a lower end portion 452 of the virtual image 450. By shifting the virtual image 450 in the vertical direction, the virtual image 450 can be presented at a position that can be easily viewed by the user, and the visibility of the virtual image 450 can be increased. By using a concave lens that is eccentrically provided in the vertical direction, the optical unit 100 can be further downsized.

In the intermediate image formation unit 360, two light diffusion plates 363a and 363b on which light diffusion surfaces 367a and 367b, which are bead surfaces, are layered respectively to face each other are used as the diffusion screen 362. Thereby, even when light becomes incident on the diffusion screen 362 at an angle in order to present image display light with an angular difference to the user, changes in the direction of a principal ray caused before and after passing through the diffusion screen 362 can be reduced. Therefore, image display light with a maintained angular difference that is caused by the concave lens 364 can be presented to the user, and the visibility of a virtual image 450 can be increased.

Further, in the diffusion screen 362, the respective light diffusion surfaces 367a and 367b of the two light diffusion plates 363a and 363b are layered to face each other. A configuration where the flat surfaces 368a and 368b are layered to face each other is a possible configuration of the diffusion screen 362. In this case, a distance between the first light diffusion surface 367a and the second light diffusion surface 367b on which image display light forms an image is large. As a result, image display light forms an image on each of the first light diffusion surface 367a and the second light diffusion surface 367b, resulting in the generation of a double image on the diffusion screen 362; thus, visibility to the user is lowered. In the present embodiment, by closely arranging the first light diffusion surface 367a and the second light diffusion surface 367b, the generation of a double image can be prevented, and the visibility of a virtual image 450 can be increased.

The present invention has been described by referring to each of the above-described embodiments. However, the present invention is not limited to the above-described embodiments only, and those resulting from any combination of them as appropriate or substitution are also within the scope of the present invention.

In the above-described embodiment, a case is shown where a concave lens 364 is arranged in front of a diffusion screen 362 as an intermediate image formation unit 360, i.e., a case is shown where image display light that passed through the concave lens 364 enters the diffusion screen 362. As another exemplary variation, the diffusion screen 362 and the concave lens 364 may be arranged reversely. In this case, optical elements are arrayed in the order of an intermediate mirror 350, a diffusion screen 362, a concave lens 364, and a projection mirror 400 between the intermediate mirror 350 and the projection mirror 400. Even when the direction of the intermediate image formation unit 360 is reversed, a virtual image 450 with high visibility can be presented by controlling the light distribution angle of image display light by the diffusion screen 362 and by controlling the direction of a principal ray by the concave lens 364.

In the above-described embodiment, the direction of a principal ray of image display light is controlled by using the concave lens 364 as the intermediate image formation unit 360. In an exemplary variation, the intermediate image formation unit 360 may be provided with only the diffusion screen 362 without providing the concave lens 364. In this exemplary variation, the direction of a principal ray of image display light is adjusted by a projection lens group 242 provided in an image projection unit 210. Also in this case, changes in the direction of a principal ray before and after passing through the diffusion screen 362 can be suppressed. Thus, image display light with a maintained direction of a principal ray that is determined by the projection lens group 242 can be presented. This allows a highly-visible virtual image 450 to be presented.

In the above-described embodiment, a light diffusion plate that has a bead surface on which a plurality of diffusion beads 369 are provided is used as a light diffusion plate 363 that forms the diffusion screen 362. Alternatively, a light diffusion plate on which diffusion beads are not used may be used in an exemplary variation. For example, while using light diffusion plates with respective light diffusion surfaces on which microlens arrays are formed, respective microlens arrays of two light diffusion plates are layered to face each other. Also in this case, while reducing changes in the direction of a principal ray before and after passing by providing the light diffusion surfaces such that the light diffusion surfaces face each other, the generation of a double image can be prevented. Thus, the visibility of a virtual image 450 can be increased. As another exemplary variation, a base member that is provided with light diffusivity by performing surface roughening on a light diffusion surface may be used as a light diffusion plate.

In the above-described embodiment, an explanation is made regarding a diffusion screen 362 that is used in an intermediate image formation unit 360 used for a head-up display. As an exemplary variation, the above-described diffusion screen 362 may be used as a screen for rear projection television. Since changes in the direction of a principal ray before and after passing through the diffusion screen 362 can be suppressed, a highly-visible image can be provided.

### [DESCRIPTION OF THE REFERENCE NUMERALS]

10 head-up display, 210 image projection unit, 360 intermediate image formation unit, 362 diffusion screen, 363 light diffusion plate, 363a first light diffusion plate, 363b second light diffusion plate, 366 base member, 366a first base member, 366b second base member, 367 light diffusion surface, 367a first light diffusion surface, 367b second light diffusion surface, 368 flat surface, 368a first flat surface, 368b second flat surface, 369 diffusion bead, 369a first diffusion bead, 369b second diffusion bead, 370 real image, 400 projection mirror, 450 virtual image

### [INDUSTRIAL APPLICABILITY]

Transmission-type screens according to the present invention allow the visibility of a projected image to be increased.

## Claims

1. An image display device (10) comprising:
an image projection unit (210) that projects image display light;
an intermediate image formation unit (360) that forms a real image that is based on the image display light projected from the image projection unit (210); and
a projection mirror (400) that reflects, toward a virtual image presenting surface, the image display light that has passed through the intermediate image formation unit (360);
wherein the intermediate image formation unit (360) includes: a concave lens (364) that controls the direction of the image display light that has passed through; and a diffusion screen (362), facing the concave lens (364), that controls the light distribution angle of the image display light,
wherein, in the diffusion screen (362) is formed by two light diffusion plates (363a, 363b) that have respective parallel flat surfaces (368a, 368b) and respective parallel light diffusion surfaces (367a, 367b), such that the two light diffusion plates diffuse and transmit incident light and are layered such that the respective light diffusion surfaces (367a, 367b) face each other, and
wherein the respective light diffusion surfaces (367a, 367b) are bead surfaces formed of a plurality of diffusion beads (369a, 369b) and diffuse light that is incident on the respective light diffusion surfaces in substantially the same light distribution.

2. The image display device (10) according to claim 1,
wherein the concave lens (364) is provided such that an optical axis position thereof is located eccentrically in either upward or downward direction with respect to the center position of the diffusion screen (362).

3. The image display device (10) according to claim 1 or 2,
wherein, the diffusion screen (362) is arranged downstream with respect to the concave lens (364) in the intermediate image formation unit (360).

## Patentansprüche

1. Eine Bildanzeigevorrichtung (10), die Folgendes aufweist:
eine Bildprojektionseinheit (210), die Bildanzeigelicht projiziert;
eine Zwischenbildformationseinheit (360), die ein reales Bild bildet, das auf dem Bildanzeigelicht basiert, welches von der Bildprojektionseinheit (210) projiziert wird; und
ein Projektionsspiegel (400), der zu einer virtuellen Bildpräsentieroberfläche hin das Bildanzeigelicht, dass durch die Zwischenbildformationseinheit (360) hindurchgegangen ist; reflektiert;
wobei die Zwischenbildformationseinheit (360) Folgendes aufweist: eine konkave Linse (364), die die Richtung des Bildanzeigelichts, dass hindurchgegangen ist, steuert; und einen Streubildschirm (362), der zu der konkaven Linse (364) weist, die den Lichtverteilungswinkel des Bildanzeigelichts steuert,
wobei der Streubildschirm (362) von zwei Lichtstreuplatten (363a, 363b) gebildet wird, die jeweilige parallele flache Oberflächen (368a, 368b) besitzen und jeweilige parallele Lichtstreuoberflächen (367a, 367b), so dass die zwei Lichtstreuplatten einfallendes Licht streuen und übertragen und so geschichtet sind, dass sich die jeweiligen Lichtstreuoberflächen (367a, 367b) zueinander weisen, und
wobei
die jeweiligen Lichtstreuoberflächen (367a, 367b) geperlte Oberflächen sind, die von einer Vielzahl von Streuperlen (369a, 369b) gebildet werden und Licht streuen, das an den jeweiligen Lichtstreuoberflächen einfällt, mit im Wesentlichen der gleichen Lichtverteilung.

2. Bildanzeigevorrichtung (10) nach Anspruch 1,
wobei die konkave Linse (364) so vorgesehen ist, dass eine optische Achsenposition davon exzentrisch in entweder einer Aufwärts- oder Abwärtsrichtung bezüglich der Mittelstellung des Streubildschirms (362) positioniert ist.

3. Bildanzeigevorrichtung (10) nach Anspruch 1 oder 2,
wobei der Streubildschirm (362) stromabwärts bezüglich der konkaven Linse (364) in der Zwischenbildformationseinheit (360) angeordnet ist.

## Revendications

1. Dispositif d'affichage d'image (10) comprenant :
un module de projection d'image (210) qui projette de la lumière d'affichage d'image ;
un module de formation d'image intermédiaire (360) qui forme une image réelle qui est basée sur la lumière d'affichage d'image projetée à partir du module de projection d'image (210) ; et
un miroir de projection (400) qui reflète, en direction d'une surface de présentation d'image virtuelle, la lumière d'affichage d'image qui est passée à travers le module de formation d'image intermédiaire (360) ;
dans lequel le module de formation d'image intermédiaire (360) comprend : une lentille concave (364) qui contrôle la direction de la lumière d'affichage d'image qui est passée à travers ; et un écran de diffusion (362), faisant face à la lentille concave (364), qui contrôle l'angle de distribution de lumière de la lumière d'affichage d'image,
dans lequel, l'écran de diffusion (362) est formé par deux plaques de diffusion de lumière (363a, 363b) qui ont des surfaces plates parallèles respectives (368a, 368b) et des surfaces de diffusion de lumière parallèles respectives (367a, 367b), de sorte que les deux plaques de diffusion de lumière diffusent et transmettent de la lumière incidente et sont superposées en couches de telle sorte que les surfaces de diffusion de lumière respectives (367a, 367b) sont face à face, et
dans lequel les surfaces de diffusion de lumière respectives (367a, 367b) sont des surfaces perlées constituées d'une pluralité de perles de diffusion (369a, 369b) et diffusent de la lumière qui arrive en incidence sur les surfaces de diffusion de lumière respectives dans sensiblement la même distribution de lumière.

2. Dispositif d'affichage d'image (10) selon la revendication 1,
dans lequel la lentille concave (364) est prévue de telle sorte qu'une position de son axe optique est située de manière excentrique soit dans la direction vers le haut soit dans la direction vers le bas par rapport à la position du centre de l'écran de diffusion (362).

3. Dispositif d'affichage d'image (10) selon la revendication 1 ou 2,
dans lequel l'écran de diffusion (362) est agencé en aval de la lentille concave (364) dans le module de formation d'image intermédiaire (360).
